# EUROPÄISCHE PATENTSCHRIFT

(11) **EP 0 820 908 B1**
(45) Veröffentlichungstag und Bekanntmachung des Hinweises auf die Patenterteilung: **24.04.2002**
(21) Anmeldenummer: 97111298.2
(22) Anmeldetag: 04.07.1997
(51) Int. Cl.: B60R 21/26

(54) **Gassack-Modul für ein Fahrzeuginsassen-Rückhaltesystem**
Airbag module for a vehicle passenger restraining system
Module à coussin gonflable pour un système de retenue d'un passager de véhicule

(30) Priorität: 23.07.1996 DE 29612777 U
(43) Veröffentlichungstag der Anmeldung: 28.01.1998
(73) Patentinhaber: TRW Occupant Restraint Systems GmbH & Co. KG, 73551 Alfdorf (DE)
(72) Erfinder: Berger, Jürgen, 73557 Mutlangen (DE)
(74) Vertreter: Degwert, Hartmut, Dipl.-Phys.

(56) Entgegenhaltungen:
- DE-A- 4 433 014
- DE-A- 19 602 471
- DE-U- 29 604 345
- US-A- 4 178 017
- US-A- 5 149 130
- PATENT ABSTRACTS OF JAPAN vol. 096, no. 003, 29.März 1996 & JP 07 291080 A (ASHIMORI IND CO LTD), 7.November 1995,

## Beschreibung

Die Erfindung betrifft ein Gassack-Modul gemäß dem Oberbegriff des Anspruchs 1, wie es aus der DE-U-296 04 345 bekannt ist.

Ein wesentliches Problem, das während des Entfaltens des Gassacks durch das von dem Gasgenerator bereitgestellte Druckgas auftritt, liegt in der möglichen Beschädigung des die Wandung des Gassacks bildenden Gassackgewebes durch das auftreffende Druckgas, das mit sehr hohem Druck und hoher Temperatur in das Innere des Gassacks einströmt. Üblicherweise liegt die zusammengelegte Wandung des Gassacks gegenüber der Einblasöffnung, so daß das eintretende Druckgas direkt auf die Wandung auftrifft. Um eine Beschädigung der Wandung durch die in dem Druckgas enthaltenen Partikel sowie die Temperatur des Druckgases zu vermeiden, kann ein vergleichsweise dickes Gewebe verwendet werden. Alternativ kann ein zusätzliches Gewebeteil verwendet werden, das zwischen der Einblasöffnung und der dieser gegenüberliegenden Wandung des Gassacks angeordnet ist, so daß das Druckgas nicht direkt auf die Wandung des Gassacks auftreffen kann.

Aus der US-A-4,178,017 und der US-A-5,149,130 sind Gassack-Module bekannt, bei denen der Gasgenerator im Inneren des Gassacks angeordnet ist. Um zu verhindern, daß der Gassack, wenn er nach Aktivierung des Gasgenerators und dem Entfalten wieder zusammenfällt, vom heißen Gasgenerator beschädigt wird, sind an dem Gasgenerator Abstandshalter in der Form von Klappen vorgesehen. Dieses Klappen werden bei der Aktivierung des Gasgenerators nach außen aufgebogen und verhindern, daß das Gewebe des Gassacks den Gasgenerator berührt.

Im Gegensatz dazu sind gemäß der Erfindung bei einem Gassack-Modul der eingangs genannten Art die Merkmale des kennzeichnenden Teils des Anspruchs 1 vorgesehen. Die gemäß der Erfindung vorgesehene Schutzklappe schützt die der Einblasöffnung des Gassacks gegenüberliegende Wandung vor einer direkten Anströmung mit dem von dem Gasgenerator bereitgestellten Druckgas. Somit kann es zu keinerlei Beschädigung der Wandung durch das einströmende Druckgas kommen. Im Gegensatz zu herkömmlichen Gassack-Modulen, bei denen das Entfalten des Gassacks durch die Wirkung des in ihn einströmenden Druckgases eingleitet wird, wird bei einem erfindungsgemäßen Gassack-Modul das Entfalten des Gassacks durch die mechanische Wirkung der sich öffnenden Schutzklappe eingeleitet. Nachdem sich die Schutzklappe geringfügig geöffnet hat, strömt das Druckgas in den Gassack ein und entfaltet diesen vollständig. Dabei wird die Schutzklappe in eine Stellung verschwenkt, in der sie nicht mehr der Einblasöffnung gegenüberliegt. Somit ergibt sich ein verlustfreies Einströmen des Druckgases in das Innere des Gassacks, ohne daß es zu einer Beschädigung der sich zu diesem Zeitpunkt bereits in sicherer Entfernung von der Einblasöffnung befindenden Wandung des Gassacks kommen kann. Da die Beanspruchung des Gassackgewebes aufgrund der Schutzklappe vergleichsweise gering ausfällt, kann ein schwächeres und damit kostengünstigeres Gewebe verwendet werden, das nur noch im Hinblick auf den Rückhaltevorgang und nicht mehr im Hinblick auf die möglichen Beschädigungen durch das eintretende Druckgas ausgelegt werden muß. Durch die Verwendung einer Schutzklappe ergibt sich weiterhin der Vorteil, daß sich zu Beginn des Entfaltungsvorganges das in das Innere des Gassacks eintretende Druckgas gleichmäßig auf der dem Gasgenerator zugewandten Seite der Schutzklappe verteilt, bevor der Gassack entfaltet und die Schutzklappe aufgeklappt wird. Dies ist insbesondere ein Vorteil bei Gassack-Modulen, bei denen die Einblasöffnung bezüglich des Gassacks asymmetrisch angeordnet ist, so daß der Entfaltungsvorgang asymmetrisch abläuft, wenn keine besonderen Vorkehrungen getroffen werden.

Gemäß einer bevorzugten Ausführungsform der Erfindung ist vorgesehen, daß im Inneren des Gassacks ein wannenartiges Halteteil angeordnet ist, dessen Boden auf der die Einblasöffnung umgebenden Wandung des Gassacks angeordnet und mit einem mit der Einblasöffnung zusammenfallenden Durchgang versehen ist und das zwei einander gegenüberliegende Seitenteile aufweist, von denen wenigstens eines mit der Schutzklappe versehen ist. Das wannenartige Halteteil bildet zusammen mit der Schutzklappe einen mit der Einblasöffnung in Verbindung stehenden Kanal, in den zu Beginn des Entfaltungsvorganges das von dem Gasgenerator gelieferte Druckgas einströmt. Nachdem eine gewisse Menge Druckgas in den Kanal eingeströmt ist, wird der Entfaltungsvorgang für den Gassack gleichzeitig mit dem Öffnen der mindestens einen Schutzklappe eingeleitet. Selbst wenn das Druckgas an beispielsweise einem axialen Ende in den Kanal einströmt, kommt es vor Beginn des Entfaltungsvorganges zu einer gleichmäßigen Verteilung des Druckgases in dem Kanal, so daß der Entfaltungsvorgang gleichmäßig ausgelöst wird. Der Boden des Halteteils schützt die die Einblasöffnung des Gassacks umgebende Wandung vor Beschädigung durch das eintretende Druckgas.

Vorzugsweise sind zwei Schutzklappen vorgesehen, die jeweils an dem freien Rand der einander gegenüberliegenden Seitenteile des wannenartigen Halteteils angeordnet sind. Bei der Verwendung von zwei Schutzklappen kann jede einzelne Schutzklappe kleiner ausgeführt werden, so daß sie leichter zu öffnen ist.

Vorzugsweise ist weiterhin vorgesehen, daß der Gassack mit dem Halteteil eine vormontierte Baugruppe bildet. Zu diesem Zweck kann die Wandung des Gassacks auf der von der Einblasöffnung abgewandten Seite der Schutzklappe bzw. Schutzklappen zusammengelegt sein und mittels beispielsweise einer aufreißbaren Folie fixiert sein. Das Halteteil hat neben seiner Funktion als Befestigungselement für die Schutzklappen ferner die Funktion des Befestigungsrahmens, der bei herkömmlichen Gassäcken in deren Innerem angeordnet ist und für die Anbindung des Gassacks an einen Gasgenerator oder an dessen Gehäuse dient.

Vorteilhafte Ausgestaltungen der Erfindung sind in den Unteransprüchen gegeben.

Die Erfindung wird nachfolgend unter Bezugnahme auf eine bevorzugte Ausführungsform beschrieben, die in der Zeichnung dargestellt ist. In dieser zeigen:
- Figur 1 einen Querschnitt durch ein erfindungsgemäßes Gassack-Modul;
- Fig. 2 schematisch eine perspektivische Ansicht des bei dem Gassack-Modul von Fig. 1 verwendeten Halteteils;
- Fig. 3 einen schematischen Querschnitt durch das in Fig. 2 dargestellte Halteteil, wobei verschiedene Stellungen der Schutzklappen dargestellt sind; und
- Fig. 4 eine Variante des in Fig. 3 dargestellten Halteteils.

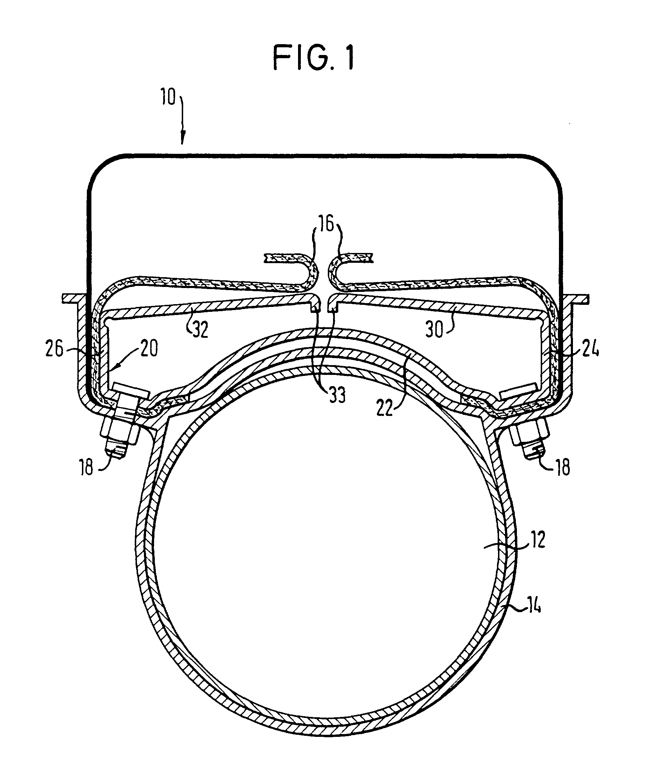

In Fig. 1 ist in einem schematischen Querschnitt ein erfindungsgemäßes Gassack-Modul 10 für ein Fahrzeuginsassen-Rückhaltesystem dargestellt. Dieses Gassack-Modul besteht im wesentlichen aus einem Gassack 16, der mit einem Halteteil 20 versehen ist. Das Gassack-Modul 10 ist mit einem Gehäuse 14 verbunden (Schraubbolzen 18), in dem eine Druckgasquelle 12 angeordnet ist. Anstelle der Schraubbolzen 18 können auch Niete oder selbstschneidende Schrauben verwendet werden. Ebenso ist die Verwendung von Klipsverbindungen möglich. Das Gehäuse 14 steht mit einer (in diesem Schnitt nicht sichtbaren) Einblasöffnung des Gassacks 16 in Verbindung, um bei Zündung des Gasgenerators 14 das Innere des Gassacks 16 mit Druckgas zu beaufschlagen.

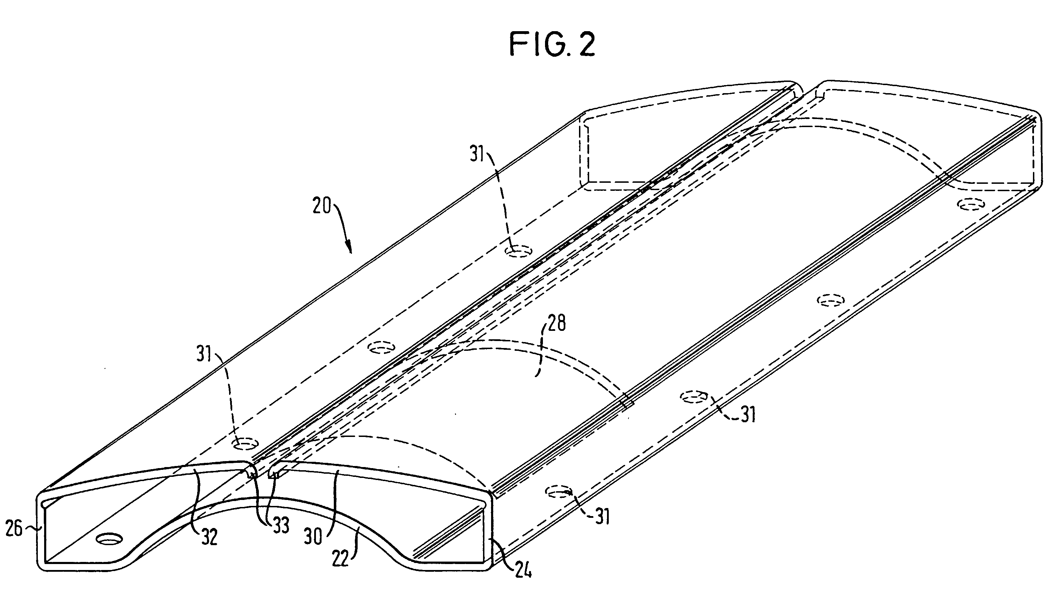

Das im Inneren des Gassacks 16 angeordnete Halteteil 20 hat eine wannenartige langgestreckte Gestalt (siehe auch Fig. 2) und weist einen Boden 22 und zwei Seitenteile 24, 26 auf. Der Boden 22 ist mit einem Durchgang 28 versehen, der mit der Einblasöffnung des Gassacks 16 zusammenfällt, wenn das Gassack-Modul 10 fertig montiert ist. An den beiden Seitenteilen 24, 26 des Halteteils 20 ist jeweils eine Schutzklappe 30 bzw. 32 angebracht, so daß zwischen den beiden Schutzklappen 30, 32, den beiden Seitenteilen 24, 26 und dem Boden 22 ein Kanal für das durch die Einblasöffnung 28 in das Innere des Gassacks 16 einströmende Druckgas gebildet ist. Das Halteteil 20 kann aus Kunststoff oder einem anderen geeigneten Werkstoff bestehen, und die Schutzklappen 30, 32 sind einteilig an die Seitenteile angeformt. Es ist auch möglich, die Schutzklappen als getrennte Teile herzustellen, die anschließend mit dem Halteteil verbunden werden. An den freien, einander gegenüberliegenden Seiten sind die Schutzklappen 30, 32 mit einem umgebogenen Rand 33 versehen, so daß keinerlei scharfe Kante entstehen kann, die den Gassack 16 beschädigen könnte.

Das Halteteil 20 kann zusammen mit dem Gassack 16 zu einer Baugruppe vormontiert werden. Zu diesem Zweck werden in Öffnungen 31, die in dem Boden 22 des Halteteils 20 gebildet sind, die Schraubbolzen 18 eingesetzt. Zusammen mit diesen Schraubbolzen wird das Halteteil 20 in das Innere des Gassacks 16 eingesetzt, so daß sich die Schraubbolzen 18 durch in der Wandung des Gassacks gebildete Durchtrittsöffnungen hindurch erstrecken, wodurch der Gassack 16 relativ zum Halteteil 20 fixiert ist. Anschließend wird der Gassack 16 auf den Schutzklappen 30, 32 zusammengelegt und mittels beispielsweise einer Folie fixiert, so daß eine vormontierte Baugruppe gebildet ist, die an dem Gehäuse 14 des Gassack-Moduls 10 angebracht werden kann.

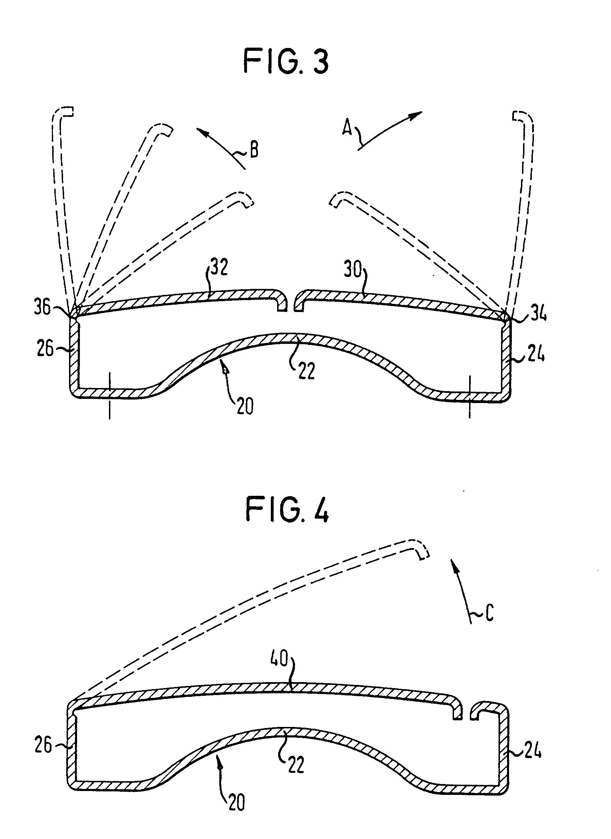

Anhand insbesondere Fig. 3 wird nun die Funktionsweise des Halteteils 20 und der Schutzklappen 30, 32 beim Entfalten des Gassacks 16 beschrieben. Nach Aktivierung des Gasgenerators 12 strömt von diesem bereitgestelltes Druckgas über die Einblasöffnung und den Durchgang 28 des Halteteils 20 in den Kanal ein, der durch die Schutzklappen 30, 32 und das Halteteil 20 gebildet ist. Während dieses ersten Zeitabschnittes nach Aktivierung des Gasgenerators 12 kommt es zu einer gleichmäßigen Verteilung des Druckgases im Inneren des Kanals, obwohl die Einblasöffnung exzentrisch in dem Kanal angeordnet ist.

Wenn ein gewisser Druck im Inneren des Kanals erreicht ist, werden die Schutzklappen 30, 32 geöffnet, wobei die auf den Schutzklappen 30, 32 zusammengelegte Wandung des Gassacks 16 vom Gasgenerator 12 weggeschoben wird. Hiermit beginnt der eigentliche Entfaltungsvorgang des Gassacks. In Fig. 3 sind gestrichelt verschiedene Zwischenstadien des Öffnens der Schutzklappen 30, 32 dargestellt, bis diese durch Aufklappen in Richtung des Pfeils A bzw. B eine vollständig geöffnete Stellung erreicht haben, in der das von dem Gasgenerator 12 gelieferte Druckgas frei in das Innere des Gassacks 16 einströmen kann. Die Schutzklappen 30, 32 sind einteilig mit den Seitenteilen 24, 26 ausgeführt, wobei die Schwenkbewegung durch einen Scharnierbereich 34 bzw. 36 erleichtert wird, der mit verringerter Wandstärke ausgeführt ist.

In Fig. 4 ist eine Variante des in Fig. 3 dargestellten Halteteils 20 gezeigt. Anstelle von zwei Schutzklappen 30, 32 wird eine einzige Schutzklappe 40 verwendet, die an dem Seitenteil 26 befestigt ist. Die Schutzklappe 40 wird nach Aktivierung des Gasgenerators 12 in Richtung des Pfeils C bis in die vollständig geöffnete Stellung verschwenkt. Durch die Verwendung von nur einer Schwenkklappe ist es insbesondere möglich, die Entfaltungsrichtung des Gassacks 16 zu beeinflussen.

## Patentansprüche

1. Gassack-Modul für ein Fahrzeuginsassen-Rückhaltesystem, mit einem Gassack, der mit einer Einblasöffnung versehen ist, durch die das Innere des Gassacks (16) mit Druckgas befüllbar ist, um den Gassack (16) aus einem zusammengelegten Zustand in einen entfalteten Zustand zu überführen,
**dadurch gekennzeichnet, daß**
im Inneren des Gassacks (16) zwischen dessen Einblasöffnung und der dieser gegenüberliegenden Wandung des Gassacks (16) mindestens eine Schutzklappe (30, 32; 40) zum Schutz der Wandung des Gassacks vor einer Beschädigung durch den durch die Einblasöffnung eintretenden Strom von Druckgas angeordnet ist.

2. Gassack-Modul nach Anspruch 1, **dadurch gekennzeichnet, daß** im Inneren des Gassacks (16) ein wannenartiges Halteteil (20) angeordnet ist, dessen Boden (22) auf der die Einblasöffnung umgebenden Wandung des Gassacks (16) angeordnet und mit einem mit der Einblasöffnung zusammenfallenden Durchgang (28) versehen ist und das zwei einander gegenüberliegende Seitenteile (24, 26) aufweist, von denen wenigstens eines mit der Schutzklappe (30, 32; 40) versehen ist.

3. Gassack-Modul nach Anspruch 2, **dadurch gekennzeichnet, daß** zwei Schutzklappen (30, 32; 40) vorgesehen sind, die jeweils an dem freien Rand der einander gegenüberliegenden Seitenteile (24, 26) des wannenartigen Halteteils (20) angeordnet sind.

4. Gassack-Modul nach einem der Ansprüche 2 und 3, **dadurch gekennzeichnet, daß** jede Schutzklappe (30, 32; 40) einteilig mit dem wannenartigen Halteteil (20) ausgeführt und durch einen Scharnierbereich (34, 36) mit verringerter Wandstärke an dem entsprechenden Seitenteil (24, 26) befestigt ist.

5. Gassack-Modul nach einem der vorhergehenden Ansprüche, **dadurch gekennzeichnet, daß** die Wandung des Gassacks (16) auf der von der Einblasöffnung abgewandten Seite der Schutzklappe (40) bzw. Schutzklappen (30, 32) gefaltet aufliegt.

6. Gassack-Modul nach Anspruch 5, **dadurch gekennzeichnet, daß** der Boden (22) des Halteteils (20) mit nach außen abstehenden Schraubbolzen (18) versehen ist, die in der Wandung des Gassacks (16) gebildete Durchtrittsöffnungen durchqueren.

7. Gassack-Modul nach Anspruch 6, **dadurch gekennzeichnet, daß** der Gassack (16) mit dem Halteteil (20) eine vormontierte Baugruppe bildet.

## Claims

1. A gas bag module for a vehicle occupant restraint system, comprising a gas bag provided with an inflation opening through which the interior of the gas bag (16) is able to be charged with a gas under pressure in order to transfer the gas bag (16) from a folded state into a deployed state,
**characterised in that**
at least one guard flap (30, 32; 40) is arranged in the interior of the gas bag (16) between the inflation opening thereof and the wall, opposite the inflation opening, of the gas bag (16) for the protection of the wall of the gas bag against damage due to the flow of gas under pressure entering through the inflation opening.

2. The gas bag module as claimed in claim 1, **characterised in that** in the interior of the gas bag (16) a trough-like holding part (20) is arranged whose bottom (22) is arranged on the wall of the gas bag (16) surrounding the inflation opening and is provided with a passage (28) coinciding with the inflation opening, said holding part having two mutually opposite side parts (24, 26), of which at least one is provided with the guard flap (30, 32; 40).

3. The gas bag module as claimed in claim 2, **characterised in that** two guard flaps (30, 32; 40) are provided which are respectively arranged on the free edge of the mutually opposite side parts (24, 26) of the trough-like holding part (20).

4. The gas bag module as claimed in either claim 2 or claim 3, **characterised in that** each guard flap (30, 32; 40) is formed in one piece with the trough-like holding part (20) and is secured in place on the corresponding side part (24, 26) by a hinge region (34, 36) of reduced wall thickness.

5. The gas bag module as claimed in any one of the preceding claims, **characterised in that** the wall of the gas bag (16) lies in a folded condition on the side of the guard flap (40) or guard flaps (30, 32) facing away from the inflation opening.

6. The gas bag module as claimed in claim 5, **characterised in that** the bottom (22) of the holding part (20) is provided with outwardly projecting screw bolts (18) which extend through openings formed in the wall of the gas bag (16).

7. The gas bag module as claimed in claim 6, **characterised in that** the gas bag (16) constitutes a pre-assembled unit together with the holding part (20).

## Revendications

1. Module de coussin à gaz d'un système de retenue pour les passagers d'un véhicule, comportant un sac à gaz qui est pourvu d'un orifice de gonflage à travers lequel on peut remplir l'intérieur du coussin à gaz (16) avec un gaz comprimé, pour faire passer le coussin à gaz (16) d'un état replié à un état déplié, **caractérisé en ce qu'**à l'intérieur du coussin à gaz (16), entre son orifice de gonflage et la paroi du coussin à gaz (6) opposée à celui-ci, est agencé au moins un clapet de protection (30, 32; 40) pour protéger la paroi du coussin à gaz vis-à-vis d'un endommagement causé par le flux de gaz comprimé qui entre à travers l'orifice de gonflage.

2. Module de coussin à gaz selon la revendication 1, **caractérisé en ce qu'**à l'intérieur du coussin à gaz (16) est agencée une pièce de maintien (20) en forme de cuvette, dont le fond (22) est agencé sur la paroi du coussin à gaz (16) qui entoure l'orifice de gonflage, et est pourvu d'un passage (28) qui coïncide avec l'orifice de gonflage et qui présente deux parties latérales (24, 26) opposées l'une à l'autre, dont l'une au moins est pourvue du clapet de protection (30, 32; 40).

3. Module de coussin à gaz selon la revendication 2, **caractérisé en ce que** l'on prévoit deux clapets de protection (30, 32; 40) qui sont chacun agencés sur le bord libre des parties latérales (24, 26) opposées l'une à l'autre, de la pièce de maintien (20) en forme de cuvette.

4. Module de coussin à gaz selon l'une des revendications 2 et 3, **caractérisé en ce que** chaque clapet de protection (30, 32; 34) est réalisé d'une seule pièce avec la pièce de maintien (20) en forme de cuvette, et est fixée à la paroi latérale correspondante (24, 26) au moyen d'une zone faisant charnière (34, 36) avec une épaisseur de paroi réduite.

5. Module de coussin à gaz selon l'une des revendications précédentes, **caractérisé en ce que** la paroi du coussin à gaz (16) repose de façon repliée sur le côté du clapet de protection (40) ou des clapets de protection (30, 32), qui est situé à l'opposé de l'orifice de gonflage.

6. Module de coussin à gaz selon la revendication 5, **caractérisé en ce que** le fond (22) de la pièce de maintien (20) est pourvu de boulons filetés (18) qui font saillie vers l'extérieur et qui passent à travers des orifices de passage formés dans la paroi du coussin à gaz (16).

7. Module de coussin à gaz selon la revendication 5, **caractérisé en ce que** le coussin à gaz (16) forme avec la pièce de maintien (20) un sous-ensemble préassemblé.
